# EUROPÄISCHE PATENTSCHRIFT

(11) **EP 0 690 326 B1**
(45) Veröffentlichungstag und Bekanntmachung des Hinweises auf die Patenterteilung: **06.03.2002**
(21) Anmeldenummer: 95109318.6
(22) Anmeldetag: 16.06.1995
(51) Int. Cl.: G02B 7/02

(54) **Vorrichtung zum Einfügen von optischen und mechanischen Bauteilen in eine Fassungshülse**
Device for inserting optical and mechanical components into a sleeve
Dispositif pour insérer des composants optiques et mécaniques dans un socle-manchon

(30) Priorität: 28.06.1994 DE 4422170
(43) Veröffentlichungstag der Anmeldung: 03.01.1996
(73) Patentinhaber: Leica Geosystems AG, 9435 Heerbrugg (CH)
(72) Erfinder: de Graffenried, Christian, CH-1814 La Tour-de Peilz (CH)
(74) Vertreter: Büchel, Kurt F., Dr.

(56) Entgegenhaltungen:
- DE-A- 1 928 861
- DE-A- 2 061 661
- PATENT ABSTRACTS OF JAPAN vol. 9, no. 58 (P-341) 14. März 1985 & JP-A-59 195 206 (K.FUTAGAWA) 6. November 1984
- PATENT ABSTRACTS OF JAPAN vol. 10, no. 149 (P-461) (2206) 30. Mai 1986 & JP-A-61 002 212 (HITACHI SEISAKUSHO) 8. Januar 1986

## Beschreibung

Die Erfindung betrifft eine Vorrichtung zum Einfügen von optischen Bauteilen und deren mechanischen Halte- und/oder Sicherungsteilen in eine Fassungshülse.

Im folgenden soll unter dem Begriff Linsensystem eine Gruppe aus miteinander verbundenen Linsen verstanden werden. Oft sind die Linsen einer Gruppe untereinander verkittet und gefaßt, sogenannte gefaßte Kittglieder. Unter dem Begriff Einfügeteile sollen sowohl optische Bauteile, wie Linsensysteme, Linsen, Blenden, Filter aller Art, als auch mechanische Bauteile, wie Distanz-, Halte- und Sicherungsteile verstanden werden, die in Fassungshülsen eingefügt werden können.

In der JP 59-195 206 A ist eine Fassungshülse beschrieben, in die optische Bauteile und mechanische Abstandsteile eingefügt werden können. Die Fassungshülse weist an ihrer Einfüllöffnung eine spezielle Verschlußvorrichtung auf, die aus federnden Sperrhaken besteht. Eine zuletzt eingefügte Linse besitzt einen größeren Durchmesser als der Durchmesser des Kreises, auf dem die Sperrhaken liegen. Beim Hindurchführen dieser Linse biegen sich die Sperrhaken soweit auf, bis die Linse einrasten kann. Die Sperrhaken halten diese Linse und damit zugleich alle zuvor eingefügten Bauteile in der Fassungshülse.

Durch die deutsche Patentschrift 2 061 661 ist bekannt, daß Fassungshülsen bzw. die dort erwähnten Linsenfassungen an der Innenwandung mit Linsenauflagen zum Halten von Linsen oder Linsensystemen versehen werden können. Diese Linsenauflagen sind Aufwulstungen, die durch spanloses Einbringen von Rillen in die Linsenfassung entstehen und die die Linsen oder Linsensysteme orientieren und halten.

Solche Linsenfassungen werden per Hand befüllt, indem die Linsen und andere Einfügeteile einzeln von oben in die Fassung eingebracht werden. Die Linsenauflagen dienen hierbei zugleich dem Luftentzug. Denn in herkömmlichen Fassungshülsen, in denen keine Linsenauflagen vorhanden sind, entsteht ein Luftpolster zwischen einer bereits in der Fassung befindlichen Linse und der gerade einzufügenden Linse. Dieses Luftpolster bleibt wegen der genauen Einpassung der Linsen an den Innendurchmesser der Fassungshülse bestehen. Die einzufügende Linse kann deshalb nicht zu ihrem vorgesehenen Platz gelangen ohne das Luftpolster zu komprimieren. Deswegen muß wenigstens eine Längsrille in der Innenwandung der Fassungshülse eingeschnitten sein, die für den nötigen Luftentzug sorgen kann.

Ein größeres Problem besteht darin, daß in die nach oben offenen Fassungshülsen Staubund Schmutzpartikel gelangen, die nach dem Befüllen unvermeidlich auch zwischen den Linsen vorhanden sind.

In jeder Raumluft sind Staub- und Schmutzpartikel in unterschiedlichen Größen und Konzentrationen vorhanden. Sie entstehen durch den Abrieb von Oberflächen, durch die Kleidung und durch den Menschen selbst. Daß der Mensch eine der hauptsächlichen Partikelquellen darstellt belegt z.B. die geschlossene, Raumfahreranzügen ähnliche Bekleidung, die das Personal in der Halbleiterfertigung aufgrund der staubempfindlichen Herstellungsprozesse tragen muß. Aus der Halbleiterindustrie stammt auch die Einteilung der Staubpartikel in Reinraumklassen, die sich durch Partikeldurchmesser und Anzahl der Partikel pro Volumen unterscheiden.

Diese Partikel haben in der Luft die bekannte Tendenz, im zeitlichen Mittel der Erdanziehung zu folgen und sich nach unten zu bewegen. Deswegen nimmt die Zahl der Partikel auf der Oberseite einer in den Raum gehaltenen Fläche in kurzer Zeit zu, während dies für die Unterseite der Fläche bedeutend weniger zutrifft. Sehr viele dieser Partikel sind mikroskopisch klein, d.h. sie sind erst unter dem Mikroskop sichtbar.

Eine nach oben offene Fassungshülse fängt somit leicht Staub- und Schmutzpartikel ein, die auch zwischen einzelne Linsen während des Befüllens gelangen. Die Qualität der Optik und insbesondere der Hochleistungsoptik, wie sie u.a. auch in der Halbleiterindustrie verwendet wird, wird dadurch in Mitleidenschaft gezogen. Die Partikel vermindern die Lichtintensität, verursachen eine inhomogene Intensitätsverteilung und sind an bestimmten Stellen sogar sichtbar.

Eine alternative Möglichkeit zu der Befüllung von oben her in die Fassungshülse hinein besteht darin, die einzufügenden Linsen und andere optische und mechanische Bauteile zunächst aufeinander zu stapeln, um dann die auf dem Kopf stehende Fassungshülse selbst darüberzustülpen. Dabei passiert es häufig, daß dieser Stapel aus Einfügeteilen umkippt. Deshalb ist diese Methode zeitaufwendig und umständlich. Sie ist für eine schnelle, einfache und sichere Handhabung zum Befüllen von Fassungshülsen wenig geeignet.

Der Erfindung liegt deshalb die Aufgabe zugrunde, eine Vorrichtung zum Befüllen von Fassungshülsen zu schaffen, die auf einfache Art und Weise Luftpolster und den Eintrag von Staubpartikel vermeidet, und die darüber hinaus eine Automatisierung ermöglicht, die die Einfügeteile ohne Verklemmen in die Fassungshülse bringt.

Diese Aufgabe wird erfindungsgemäß durch die Merkmale der Ansprüche 1 und 2 gelöst.

Vorteilhafte Weiterbildungen und Verbesserungen der Erfindung sind durch die Merkmale der Unteransprüche gekennzeichnet.

Die Erfindung ist daraufhin ausgerichtet, daß anders als bei der herkömmlichen Handbefüllung die Einfüllöffnung der Fassungshülse nach unten zeigt. Die Einfügeteile werden einzeln nacheinander von unten nach oben in die Fassungshülse eingefügt. Dabei helfen im wesentlichen die Sperrelemente im Grundkörper sowie eine den Einfügeteilen entsprechende Haltevorrichtung.

Die Haltevorrichtung, die auch als Support bezeichnet wird, kann z.B. aus einem Metallzylinder bestehen, dessen Durchmesser etwas kleiner ist als der des Einfügeteils.
Die Stirnseite des Zylinders, die nach oben zeigt, kann eine Schneide besitzen. Auf dieser Schneide liegt das Einfügeteil zentriert auf.

Die Haltevorrichtung hat also die Aufgabe, das Einfügeteil zu halten. Zugleich dient sie auch als Transportmittel, das ein Einfügeteil aus einem Sortiment von Einfügeteilen aufnimmt, es zur Einfügevorrichtung transportiert und es dort an die Fassungshülse abgibt.

Die Fassungshülse ist während der Befüllung mit dem Grundkörper lösbar verbunden. Sie sitzt auf einer Anschlagfläche auf dem Grundkörper auf und ist zur Durchführungsöffnung des Grundkörpers zentriert.

An der Innenwandung der Durchführungsöffnung des Grundkörpers sind bewegliche Sperrelemente angebracht, die mit ihren Enden bis in den Eingangsbereich der Fassungshülse heranreichen. Die beweglichen Sperrelemente sind so aufgebaut, daß sie die Wirkung einer Reuse besitzen, d.h. sie lassen ein ankommendes Einfügeteil zwar passieren, so daß es in die Fassungshülse hineingelangen kann, halten es aber anschließend dort zurück. Das Zurückhalten geschieht dadurch, daß sich die beweglichen Sperrelemente nach dem Hindurchführen des Einfügeteils auf die Haltevorrichtung zubewegen und dann selbst die Haltefunktion für das Einfügeteil übernehmen. Das Einfügeteil befindet sich nun im Eingangsbereich der Fassungshülse und die Haltevorrichtung ist zum Beladen eines weiteren Einfügeteils wieder frei. Bei Wiederholung des Transport- und Einfügevorgangs wird das nächste Einfügeteil in die Fassungshülse eingefügt und schiebt dabei die bereits in der Fassungshülse befindlichen Einfügeteile weiter in die Fassungshülse hinein. Auf diese Art und Weise wird die Fassungshülse sukzessiv von unten nach oben mit Einfügeteilen befüllt. Das letzte Einfügeteil ist meistens eine Verschlußschraube, die in ein Gewinde in der Fassungshülse geschraubt wird.

Ein entscheidender Vorteil der beschriebenen Einfügevorrichtung und des dadurch bedingten Einfügevorgangs besteht darin, daß das Problem des Staubpartikeleintrags gelöst wird, insbesondere auch der Partikel, die sich von der Innenwand der Fassungshülse lösen. Die Einfüllöffnung der Fassungshülse zeigt während des Befüllens nach unten. Dies ist unkonventionell. Es verhindert in hohem Maße, daß Schmutz- und Staubpartikel aus der Umgebungsluft in die Fassungshülse und zwischen die Einfügeteile gelangen.

Falls während des Einfügens ein Verkanten des Einfügeteils oder ein Berühren des Randes der Einfüllöffnung vorkommen sollte, würden die abgeriebenen Partikel des Einfügeteils und der Fassungshülse nach unten wegfallen. Sie fallen also nicht in die Fassungshülse hinein, wie es bei der herkömmlichen Befüllung von oben her zwangsweise der Fall ist.

Die Einfügevorrichtung funktioniert jedoch so gut, daß ein Verkanten erst gar nicht auftritt. Sie erlaubt, daß der Innendurchmesser der Fassungshülse und der Außendurchmesser der für sie vorgesehenen Einfügeteile mit sehr engen Toleranzen aufeinander angepaßt werden kann. Dadurch lassen sich die Einfügeteile innerhalb der Fassungshülse ohne zu verhaken leicht verschieben und erzeugen dabei erheblich weniger Abriebpartikel von sich und der Innenwandung. In entscheidender Weise wird so die Entstehung von Abriebpartikeln durch Einfügeteile vermindert, die sich bereits in der Fassungshülse befinden.

Durch diese geschilderten Effekte konnte, wie vergleichende Untersuchungen erwiesen haben, der Schmutzpartikeleintrag in das aufgebaute Optiksystem in erheblichem Umfang reduziert werden.

Ein weiterer Vorteil der Erfindung ergibt sich daraus, daß keine Entlüftungsrillen in die Fassungshülsen eingeschnitten oder keine der eingangs beschriebenen Aufwulstungen als Linsenauflagen erzeugt werden müssen. Da wie bereits erwähnt der Innendurchmesser der Fassungshülse und der Außendurchmesser der Einfügeteile mit sehr engen Toleranzen aufeinander angepaßt sind, ist ein Verkanten nicht möglich und die Einfügeteile sind innerhalb der Fassungshülse leicht verschiebbar. So bleibt ein bestimmter Abstand zwischen den Einfügeteilen, wenn sie sich einmal in der Fassungshülse befinden, unverändert bestehen. Bei weiterer Befüllung werden alle bereits eingefügten Bauteile als Block gemeinsam verschoben. Das Volumen eines jeden Luftpolsters zwischen zwei Einfügeteilen, z.B. zwischen zwei Linsen, ist also fixiert. Somit ist eine Entlüftungseinrichtung nicht mehr notwendig und entsprechende Arbeitsvorrichtungen und Bearbeitungsgänge können entfallen.

Eventuelle Bedenken, die Luftpolster könnten sich bei Erwärmung nicht ausdehnen und dadurch einen Druck auf die Einfügeteile ausüben sind unbegründet, da eine Änderung der Umgebungstemperatur, wie auch eine Änderung des äußeren Luftdrucks nur sehr langsam vonstatten geht. Deshalb steht genügend Zeit für einen Druckausgleich zwischen den Luftpolstern zur Verfügung, auch bei einer eng tolerierten Einpassung der Einfügeteile in die Fassungshülse.

Für die beweglichen Sperrelemente in der Durchführungsöffnung des Grundkörpers gibt es verschiedene Ausführungsmöglichkeiten. Bei einer Ausführungsart bestehen die Sperrelemenete aus federelastischen Stäben, die zur Innenwandung fluchtend oder parabelförmig aus der Innenwandung der Durchführungsöffnung in Richtung der Fassungshülse herauslaufen. Ihre Fußpunkte sind mit der Innenwandung des Grundkörpers fest verbunden. Die federelastischen Stäbe können mit dem Grundkörper durch ein Gußverfahren oder durch Fräsen aus einem einzigen Stück hergestellt sein. In die Innenwandung sind Ausnehmungen eingebracht, in die die federnden Teile der Sperrelemente während des Hindurchführens der Einfügeteile eindrückbar sind.

Die federnden Enden der Sperrelemente können als hakenförmige Fortsätze ausgebildet sein, die in die Durchführungsöffnung hineinragen. Sie unterstützen den reusenartigen Mechanismus. So biegt das Einfügeteil beim Hindurchführen zunächst die Sperrelemente etwas auf, die dadurch in die Ausnehmungen der Innenwandung der Durchführungsöffnung gedrückt werden. Die Sperrelemente federn zurück, sobald das Einfügeteil an den hakenförmigen Fortsätzen vorbeigeführt ist. Durch das Zurückziehen der Haltevorrichtung kommt das Einfügeteil auf den hakenförmigen Fortsätzen zu liegen. und es befindet sich damit in der Fassungshülse.

Für einen solchen Grundkörper mit federelastischen Sperrelementen können verschiedene Materialien in Frage kommen. Insbesondere gibt es Kunststoffe, die abriebfest sind, die ein leichtes Durchgleiten der Einfügeteile ermöglichen und die bei geeigneter Dimensionierung eine angemessene federelastische Kraftwirkung für die Sperrelemente besitzen. Natürlich ist eine solche Einfügevorrichtung aus einem Stück nur für einen fest vorgegebenen Durchmesser der Einfügeteile und der mit ihnen verknüpften Fassungshülse bestimmt. Einfügeteile und Fassungshülsen anderer Größe benötigen jeweils eine eigene, speziell für ihre Größe hergestellte Einfügevorrichtung.

Diese Einschränkung kann mit der Wahl eines anderen, aber komplizierteren Aufbaus der Einfügevorrichtung aufgehoben werden. Sind die Sperrelemente auf einzelne Backen angebracht, die im Grundkörper in radialer Richtung verschiebbar und fixierbar sind, so läßt sich der Durchmesser der Durchführungsöffnung variabel verstellen. Er kann somit unterschiedlichen Durchmessern von Einfügeteilen angepaßt werden. Damit auch unterschiedliche Fassungshülsen mit einem den Einfügeteilen entsprechenden Innendurchmesser am Grundkörper aufgenommen werden können, ist es günstig, die lösbare Aufnahme für die Fassungshülsen direkt auf den Backen anzubringen. Sie kann im einfachsten Fall als Aufnahmenocken ausgebildet sein. Die Aufnahmenocken aller Backen wirken zusammen als Klemmung für die Fassungshülse.

Der geschilderte Aufbau einer variablen Durchführungsöffnung ist zwar kostspieliger, eröffnet aber die Möglichkeit, daß Einfügeteile mit unterschiedlichen Querschnitten oder Durchmessern verwendet werden können. Zumindest innerhalb eines gewissen Größenbereichs von Fassungshülsen und Einfügeteilen genügt eine einzige Einfügevorrichtung dieser Art und es entfällt das Wechseln der Einfügevorrichtung.

Sind die Sperrelemente nicht federelastisch sondern starr als Hebelteile aufgebaut, so müssen ihre Fußpunkte in der Innenwandung der Durchführungsöffnung schwenkbar gelagert sein, um den geschilderten reusenartigen Mechanismus zu gewährleisten. Dabei können die Hebelteile so gestaltet sein, daß sie sich nach dem Hindurchführen eines Einfügeteils aufgrund ihres Eigengewichtes oder über eine zusätzliche Federkraft aufeinander zubewegen, so daß das Einfügeteil auf ihnen aufliegen kann. Für den Fall, daß nur das Eigengewicht der Sperrelemente genutzt wird, ist es zwingend, daß die Achse der Durchführungsöffnung vertikal verläuft und auch die Fassungshülse vertikal auf dem Grundkörper aufgesetzt ist.

Die Hebelteile können aber auch an Betätigungselemente angelenkt sein, die aus dem Grundkörper nach außen führen. Die Betätigungselemente können manuell oder elektromechanisch so betätigt werden, daß die Hebelteile die Durchführungsöffnung für die Einfügeteile freigeben oder sperren.

Allen genannten Ausführungsarten der Erfindung ist gemeinsam, daß sie sich für einen automatisierten Ablauf des Befüllens von Fassungshülsen in besonderer Weise eignen.

Die Haltevorrichtung kann dabei Teil eines Roboterarmes sein, oder sie wird mit Hilfe eines Robotergreifers oder mit einem motorisierten x-y-z-Tisch im dreidimensionalen Raum bewegt. Die Einfügeteile werden auf diese Art aus einem Vorratslager abgeholt und über die erfindungsgemäße Einfügevorrichtung in die Fassungshülsen eingebracht.

Alle diese Einrichtungen können sich in einem gemeinsamen, abgeschlossenen und vor Verschmutzung geschützen Reinraum befinden.

Bei sehr schnellen Bewegungen des Roborters besteht die Gefahr, daß die Einfügeteile während des Transports vom Vorratslager zur Fassungshülse ihre stabile Lage auf der Haltevorrichtung verlieren und unter Umständen von der Haltevorrichtung fallen. Wenn das Eigengewicht nicht ausreicht, kann zumindest für flächig geschlossene Einfügeteile wie Linsen oder Filter die Andruckkraft auf die Schneide der Haltevorrichtung durch Unterdruck in der Haltevorrichtung vergrößert werden. Diese Einfügeteile werden so durch Ansaugen zusätzlich auf die Haltevorrichtung gepreßt und der Roboter kann sich mit ihnen schneller bewegen. Für andere Einfügeteile wie Halteringe oder Blenden benötigt der Robotergreifer gegebenenfalls noch zusätzliche Haltevorrichtungen, die den Einfügeteilen während des Transports noch einen seitlichen Halt verleihen.

Im folgenden werden Ausführungsbeispiele der Erfindung anhand der Zeichnung näher erläutert. Es zeigt
- Fig.1: einen Grundkörper mit federelastischen Sperrelementen und eine am Anschlag befindlichen Fassungshülse,
- Fig.2: einen Grundkörper mit längeren federelastischen Sperrelementen, die in die Fassungshülse hineinreichen,
- Fig.3: einen Grundkörper mit Sperrelementen, die als Hebelteile ausgebildet sind,
- Fig.4: eine Einfügevorichtung mit durch Backen verstellbarer Innenwandung und
- Fig.5: einen Einfügeablauf.

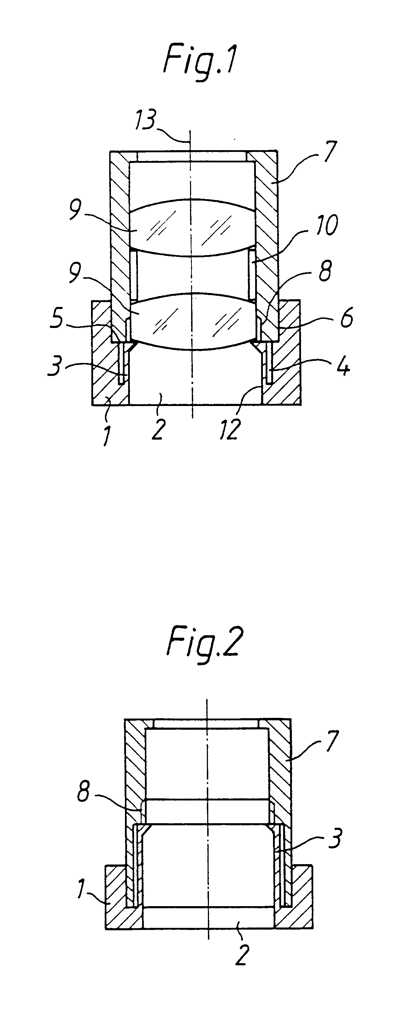

In Fig.1 ist in einer Schnittebene mit der Achse 13 eine rotationssymmetrische Ausführungsform der Einfügevorrichtung dargestellt, bei der ein Grundkörper 1 und federelastische Stäbe 3 als Sperrelemente aus einem Stück gefertigt sind. Eine Fassungshülse 7 befindet sich mit ihrer Einfüllöffnung nach unten auf einem Längenanschlag 5 mit dem Grundkörper 1. Fassungshülse 7 und Grundkörper 1 bilden durch den seitlichen Anschlag 6 eine lösbare Steckverbindung. In der Fassungshülse 7 befinden sich zwei Linsen 9 und ein Distanzelement 10. Im Nahbereich der Einfüllöffnung besitzt die Fassungshülse 7 ein Innengewinde 8.

Der Grundkörper 1 weist eine Durchführungsöffnung 2 auf, die an den Innendurchmesser der Fassungshülse 7 angepaßt und zu ihr koaxial ist. Die Einfügeteile 9, 10 sind durch die Durchführungsöffnung 2 des Grundkörpers 1 in die Fassungshülse 7 einführbar. In der Durchführungsöffnung 2 sind die federelastischen Stäbe 3 an einem Ende fest mit der Innenwandung 12 des Grundkörpers 1 verbunden, wobei sich das freie Ende der federelastischen Stäbe 3 näher an der Fassungshülse befindet als das feste Ende.

Die federelastischen Sperrelemente 3 erreichen knapp die Höhe des Längenanschlags 5, so daß sie ohne die Fassungshülse 7 zu berühren in die Ausnehmungen 4 der Innenwandung 12 des Grundkörpers 1 eingedrückt werden können. DieAusnehmungen 4 verlaufen im wesentlichen parallel zur Symmetrieachse der Durchführungsöffnung 2. Die federelastischen Stäbe 3 sind von den Einfügeteilen 9, 10 beim Passieren der Durchführungsöffnung 2 nur in Richtung Fassungshülse 7 in die Ausnehmungen 4 auslenkbar und federn nach Passieren der Einfügeteile 9, 10 wieder in die ursprüngliche Sperrposition zurück. Hakenförmige Fortsätze 11 der federelastischen Sperrelemente 3 unterstützen die Einfügeteile 9, 10 und verhindern damit, daß die Einfügeteile 9, 10 aufgrund ihres eigenen Gewichtes wieder aus der Fassungshülse 7 gleiten.

In den überwiegenden Fällen werden zylindersymmetrische Formen für die Fassungshülse 7 und damit auch für die zugehörige Durchführungsöffnung 2 im Grundkörper 1 verwendet. Nur solche Formen sind in den Figuren dargestellt. Die Verbindung von Fassungshülse 7 und Grundkörper 1 erfolgt dabei so, daß ihre Symmertrieachsen 13 zusammenfallen und sie deswegen und aufgrund ihrer Zylindersymmetrie zueinander koaxial angeordnet sind. Bei eventueller Verwendung anderer Querschnitte soll der Begriff koaxial hier in erweitertem Sinne verstanden werden. Im allgemeinen besitzen z.B. Zylinderlinsen einen rechteckigen Querschnitt, wodurch der Querschnitt der Fassungshülse 7 und der Durchführungsöffnung 2 des Grundkörpers 1 ebenfalls rechteckig sein müssen. Bei ihrem Zusammenbau sollen Fassungshülse 7 und Grundkörper 1 in ihrer Form zueinander ausgerichtet und ihre Symmetrieachsen zur Deckung gebracht werden. Nur so ist es möglich, die mechanischen und optischen Bauteile in die Fassungshülse 7 einzufügen.

In Fig.2 sind die federelastischen Sperrelemente 3 in einer längeren Form ausgeführt. Sie ragen weit nach oben in die Fassungshülse 7 hinein. Das Innengewinde 8 liegt in mittlerer Höhe, denn diese Fassungshülse 7 soll nur etwa zur Hälfte mit Einfügeteilen befüllt werden.

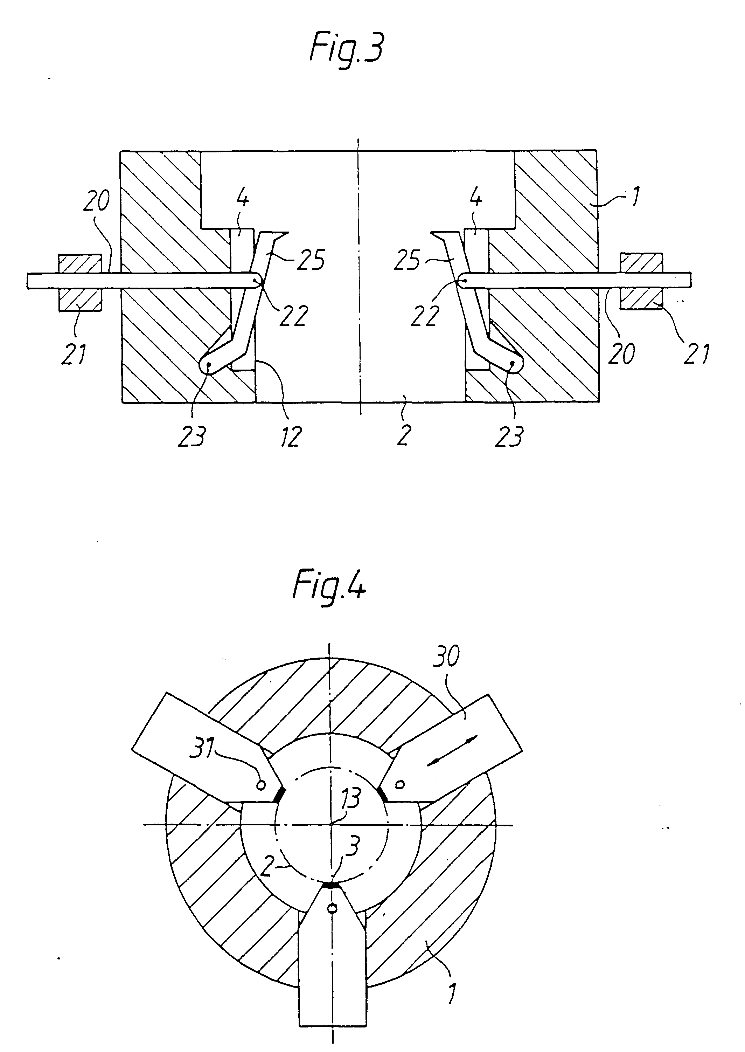

In Fig.3 sind als Sperrelemente Hebelteile 25 vorgesehen, die einzeln und über eine Achse 23 schwenkbar gelagert sind. Die Hebelteile 25 sind über eine weitere Achse 22 mit Betätigungselementen 20 verbunden, die aus dem Grundkörper 1 herausführen. Die Betätigungselemente 20 können die Hebelteile 25 so antreiben, daß diese die Durchführungsöffnung 2 für die Einfügeteile freigeben oder sperren. Erfolgt die Verstellung der Hebelteile 25 manuell über die Betätigungselemente 20, so ist die Vorrichtung 21 als Arretiervorrichtung ausgebildet und kann im einfachsten Fall eine Klemmung sein.

Bei elektromechanischer Verstellung der Hebelteile 25 ist die Vorrichtung 21 mit einem Elektromotor und eventuell einem Getriebe ausgestattet. Damit ist eine elektrische Steuerung der Betätigungselemente 20 und der Hebelteile 25 möglich.

Als eine weitere Variante werden die Hebelteile 25 mit einer Feder, z.B. einer Schrauben- oder Blattfeder angetrieben. Hierbei können die Aufbauten aus Betätigungselementen 20, Vorrichtung 21 und Achse 22 in Fig.3 entfallen.

Es gibt auch die Möglichkeit, daß die Hebelteile 25 aufgrund ihres Eigengewichtes, d.h. genauer aufgrund ihres Drehmomentes in Richtung der Durchführungsöffnung 2 fallen, die dadurch gesperrt wird. Die Hebelform der Hebelteile 25 ergibt dabei ein ausreichend großes Drehmoment. Die Ausnutzung der Schwerkraft bedingt allerdings eine gute vertikale Ausrichtung der Achse der Durchführungsöffnung 2.

Fig. 4 zeigt in der Draufsicht eine verstellbare Einfügevorrichtung für verschiedene Durchmesser von Fassungshülsen 7 und zugehörigen Einfügeteilen. Es sind vorzugsweise drei Backen 30 im Grundkörper 1 angebracht, die radial und zur Achse 13 symmetrisch verstellbar sind. Diese Backen 30 bilden die wirksame Innenwandung des Grundkörpers 1. Die Aufnahmenocken 31 dienen dem seitlichen Anschlag für die Fassungshülsen 7. Durch die Aufnahmenocken 31 werden die Fassungshülsen 7 geklemmt und sind so lösbar mit dem Grundkörper verbunden.

Die Backen 30 gestalten nun mit den Sperrelementen 3 die variable Durchführungsöffnung 2. Im unteren Teil der Durchführungsöffnung 2 werden die Einfügeteile geführt und gleiten dann an den Sperrelementen 3 vorbei, die sie nach dem vollständigen Durchführen halten. Die beweglichen Sperrelemente 3 sind dabei nach einer der oben dargelegten Arten ausgeführt.

Die Backen 30 können manuell, elektromechanisch oder elektronisch gesteuert eingestellt werden. Sie sind in radialer Richtung so variabel, daß sie innerhalb eines bestimmten Bereichs für jeden beliebigen Fassungshülsendurchmesser verwendbar sind.

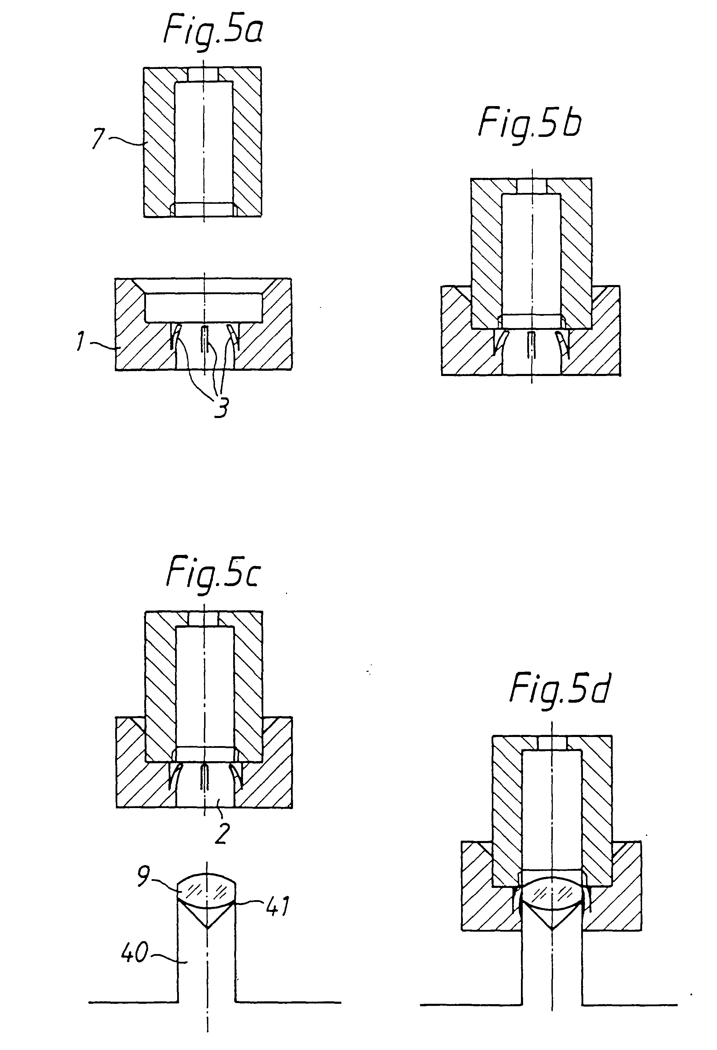

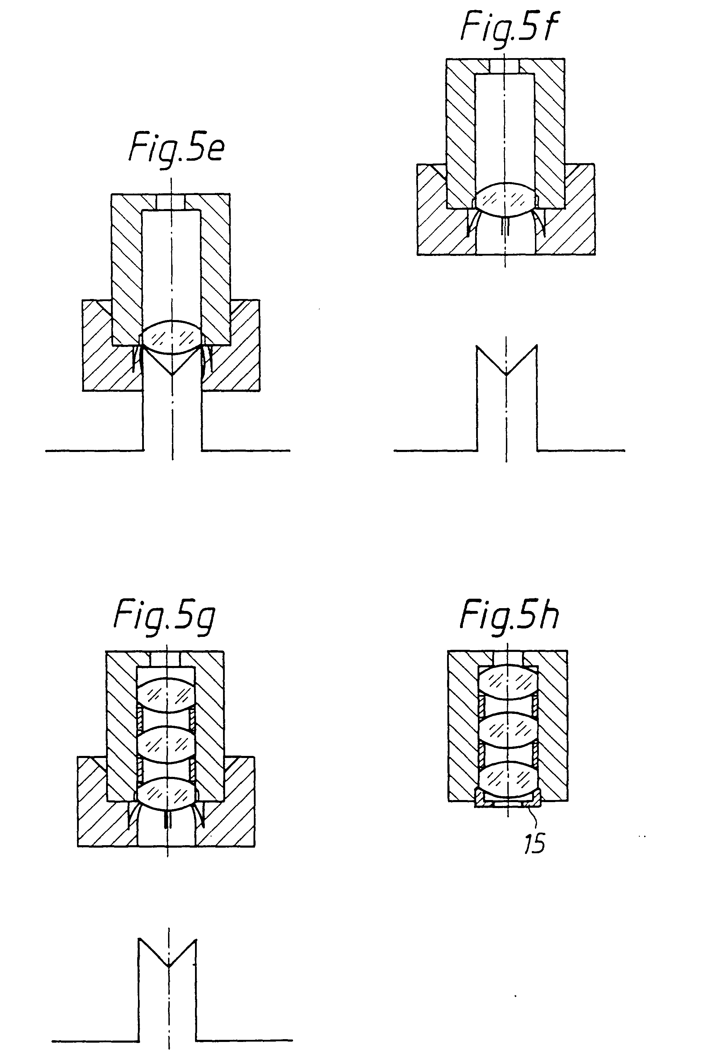

In Fig. 5 ist ein Einfügeablauf dargestellt. Die einzelnen Einfügestadien werden im folgenden der Reihenfolge nach beschrieben. Die Fassungshülse 7 wird in Fig.5a mit der Einfüllöffnung nach unten in die für sie vorgesehene Aufnahme im Grundkörper 1 gebracht. In Fig.5b sind Fassungshülse 7 und Grundkörper 1 verbunden. In Fig.5c wird von unten her auf der Schneide 41 der Haltevorrichtung 40 eine Linse 9 in die Durchführungsöffnung 2 des Grundkörpers 1 gebracht. Die Linse 9 wird in Fig.5d durch die Durchführungsöffnung 2 geführt und drückt durch die über die Haltevorrichtung 40 einwirkende Kraft die federelastischen Sperrelemente 3 soweit auf, daß sie hindurchgleiten kann. Nach dem vollständigen Hindurchführen der Linse 9 durch die Sperrelemente 3 in Fig.5e verringert sich der Durchmesser der Sperrelemente 3 auf den Durchmesser der Haltevorrichtung 40. Die Sperrelemente 3 versperren so der Linse 9 den Weg aus der Fassungshülse 7 und so ist nach Fig.5f die Haltevorrichtung 40 zum Beladen eines weiteren Einfügeteils wieder frei. Dieser Vorgang wiederholt sich nach der geschilderten Art, wobei bei jedem Einfügen eines weiteren Einfügeteils die bereits in der Fassungshülse befindlichen Einfügeteile nach oben geschoben werden. In Fig.5g ist die Fassungshülse 7 vollständig gefüllt. Die Einführung der Einfügeteile 9, 10 in die Fassungshülse 7 erfolgt automatisch, wobei die Haltevorrichtung 40 durch einen Roboterarm geführt wird oder selbst Teil eines Roboterarmes ist.

Danach wird die Fassungshülse 7 mit einem Verschluß 15 verschlossen, der die Einfügeteile in der Fassungshülse 7 so weit nach oben schiebt, bis die zuerst eingefügte Linse 9 das andere Ende der Fassungshülse 7 berührt. An dieser Stelle befindet sich in der Fassungshülse 7 die Eintrittsöffnung für die Optik.

Der Verschluß 15 kann nun in die Fassungshülse 7 eingepreßt oder mit ihr verklebt oder verkittet werden. Meist wird aber ein Schraubverschluß 15 verwendet. In der dargestellten Fassungshülse 7 ist deshalb im Bereich der Einfüllöffnung ein Innengewinde 8 für einen solchen Schraubverschluß 15 eingeschnitten. Mit Hilfe einer für den Schraubverschluß 15 präparierten Haltevorrichtung 40 wird der Verschlußring eingeschraubt. Hierbei wird die Haltevorrichtung 40 gegenüber der feststehenden Fassungshülse 7 gedreht, denn die meisten Roboter haben den Freiheitsgrad der Drehung im Greifer integriert. Natürlich ist es auch möglich, die Fassungshülse 7 mit dem Grundkörper 1 gegen die festgehaltene Haltevorrichtung 40 zu drehen.

Als eine einfachere, weniger aufwendige Vorgehensweise beim Verschließen der Fassungshülse 7 ist es auch möglich, vor dem Anbringen des Verschlusses 15 die Fassungshülse 7 mit den Einfügeteilen auf den Kopf zu stellen. Dadurch kann die Fassungshülse 7 von oben mit dem Verschluß 15 abgeschlossen werden.

## Patentansprüche

1. Vorrichtung mit einer Fassungshülse (7) und einem Grundkörper (1) zum Einfügen von optischen Bauteilen und deren mechanischen Halte-und/oder Sicherungsteilen in die Fassungshülse (7) mit folgenden Merkmalen:
a) Mit der Fassungshülse (7) ist der Grundkörper (1) lösbar verbunden, wobei der Grundkörper (1) eine Durchführungsöffnung (2) aufweist, die an den Innendurchmesser der Fassungshülse (7) angepaßt und zu ihr koaxial ist;
b) Einfügeteile (9, 10) sind durch die Durchführungsöffnung (2) des Grundkörpers (1) in die Fassungshülse (7) einführbar;
c) in der Durchführungsöffnung (2) sind federelastische Stäbe (3) als Sperrelemente an einem Ende fest mit der Innenwandung (12) des Grundkörpers (1) verbunden, wobei sich das freie Ende der federelastischen Stäbe (3) näher an der Fassungshülse (7) befindet als das feste Ende;
d) in der Durchführungsöffnung (2) des Grundkörpers (1) sind in der Innenwandung (12) im wesentlichen parallel zur Symmetrieachse der Durchführungsöffnung (2) verlaufende Ausnehmungen (4) vorgesehen;
e) die federelastischen Stäbe (3) sind von den Einfügeteilen (9, 10) beim Passieren der Durchführungsöffnung (2) nur in Richtung Fassungshülse (7) in die Ausnehmungen (4) auslenkbar und federn nach Passieren der Einfügeteile (9, 10) wieder in die ursprüngliche Sperrposition zurück.

2. Vorrichtung mit einer Fassungshülse (7) und einem Grundkörper (1) zum Einfügen von optischen Bauteilen und deren mechanischen Halte-und/oder Sicherungsteilen in die Fassungshülse (7) mit folgenden Merkmalen:
a) Mit der Fassungshülse (7) ist der Grundkörper (1) lösbar verbunden, wobei der Grundkörper (1) eine Durchführungsöffnung (2) aufweist, die an den Innendurchmesser der Fassungshülse (7) angepaßt und zu ihr koaxial ist;
b) Einfügeteile (9, 10) sind durch die Durchführungsöffnung (2) des Grundkörpers (1) in die Fassungshülse (7) einführbar;
c) in der Durchführungsöffnung (2) sind Hebelteile (25) als Sperrelemente an einem Ende in der Innenwandung (12) des Grundkörpers (1) schwenkbar gelagert, wobei sich das freie Ende der Hebelteile (25) näher an der Fassungshülse (7) befindet als das schwenkbar gelagerte Ende;
d) in der Durchführungsöffnung (2) des Grundkörpers (1) sind in der Innenwandung (12) im wesentlichen parallel zur Symmetrieachse der Durchführungsöffnung (2) verlaufende Ausnehmungen (4) vorgesehen;
e) die Hebelteile (25) sind von den Einfügeteilen (9, 10) beim Passieren der Durchführungsöffnung (2) nur in Richtung Fassungshülse (7) in die Ausnehmungen (4) schwenkbar und kehren nach Passieren der Einfügeteile (9, 10) aufgrund äußerer Krafteinwirkung wieder in die ursprüngliche Sperrposition zurück.

3. Einfügevorrichtung nach Anspruch 1 oder 2, **dadurch gekennzeichnet, daß** zur Aufnahme der Fassungshülse (7) im Grundkörper (1) ein seitlicher Anschlag (6) und ein Längenanschlag (5) vorgesehen sind, die sich an dem der Fassungshülse (7) zugewandten Ende des Grundkörpers (1) koaxial zur Innenwandung (12) der Durchführungsöffnung (2) befinden..

4. Einfügevorrichtung nach einem der vorhergehenden Ansprüche, **dadurch gekennzeichnet, daß** Fassungshülse (7) und Grundkörper (1) vertikal im Raum angeordnet sind.

5. Einfügevorrichtung nach Anspruch 1, **dadurch gekennzeichnet, daß** die federelastischen Stäbe (3) parabelförmig aus der Innenwandung (12) herauslaufen.

6. Einfügevorrichtung nach Anspruch 1, **dadurch gekennzeichnet, daß** die federelastischen Stäbe (3) fluchtend zur Innenwandung (12) verlaufen und an ihren federnden Enden in die Durchführungsöffnung (2) gerichtete hakenförmige Fortsätze (11) aufweisen, deren zur Fassungshülse (7) weisender Teil abgeflacht ist.

7. Einfügevorrichtung nach Anspruch 2, **dadurch gekennzeichnet, daß** die freien Enden der Hebelteile (25) in die Ausnehmungen (4) so einfügbar sind, daß sie bei vertikaler Anordnung der Fassungshülse (7) unter dem Einfluß der Schwerkraft in die Durchführungsöffnung (2) fallen.

8. Einfügevorrichtung nach Anspruch 2, **dadurch gekennzeichnet, daß** an die Hebelteile (25) aus dem Grundkörper (1) herausführende Betätigungselemente (20) so angelenkt sind, daß die Hebelteile (25) zur Freigabe oder zum Sperren der Durchführungsöffnung (2) angetrieben werden können.

9. Einfügevorrichtung nach Anspruch 1 oder 2, **dadurch gekennzeichnet, daß** die Innenwandung (12) des Grundkörpers (1) durch mindestens drei radial verschiebbare und fixierbare Backen (30) gebildet wird, die jeweils mit mindestens einem federelastischen Stab (3) oder Hebelteil (25) versehen sind.

10. Einfügevorrichtung nach einem der vorhergehenden Ansprüche, **dadurch gekennzeichnet, daß** eine relativ zur Durchführungsöffnung (2) steuerbar verschiebbare Haltevorrichtung (40) für Aufnahme, Transport und Abgabe der optischen Bauteile und deren mechanischen Halte- und/oder Sicherungsteilen vorgesehen ist.

11. Einfügevorrichtung nach Anspruch 10, **dadurch gekennzeichnet, daß** die Haltevorrichtung (40) eine schneidenförmige Auflage (41) für die Einfügeteile (9, 10) aufweist.

12. Einfügevorrichtung nach Anspruch 10 oder 11, **dadurch gekennzeichnet, daß** die Haltevorrichtung (40) Teil eines Roboterarmes ist.

## Claims

1. Device comprising a sleeve (7) and a base element (1) and intended for inserting optical components and their mechanical retaining and/or securing parts into the sleeve (7), having the following features:
a) The base element (1) is detachably connected to the sleeve (7), the base element (1) having a passage (2) which is adapted to the internal diameter of the sleeve (7) and is coaxial with it;
b) parts (9, 10) to be inserted can be inserted through the passage (2) of the base element (1) into the sleeve (7);
c) in the passage (2), springy rods (3) as blocking elements are firmly connected at one end to the inner surface (12) of the base element (1), the free end of the springy rods (3) being located closer to the sleeve (7) than the fixed end;
d) in the passage (2) of the base element (1), recesses (4) substantially parallel to the axis of symmetry of the passage (2) are provided in the inner surface (12);
e) the springy rods (3) can be deflected only in the direction of the sleeve (7) into the recesses (4) by the parts (9, 10) to be inserted on passing through the passage (2) and spring back to the original blocking position after the parts (9, 10) to be inserted have passed.

2. Device comprising a sleeve (7) and a base element (1) and intended for inserting optical components and their mechanical retaining and/or securing parts into the sleeve (7), having the following features:
a) The base element (1) is detachably connected to the sleeve (7), the base element (1) having a passage (2) which is adapted to the internal diameter of the sleeve (7) and is coaxial with it;
b) parts (9, 10) to be inserted can be inserted through the passage (2) of the base element (1) into the sleeve (7);
c) in the passage (2), lever parts (25) as blocking elements are pivotably mounted at one end in the inner surface (12) of the base element (1), the free end of the lever parts (25) being closer to the sleeve (7) than the pivotably mounted end;
d) in the passage (2) of the base element (1), recesses (4) substantially parallel to the axis of symmetry of the passage (2) are provided in the inner surface (12) ;
e) the lever parts (25) can be pivoted only in the direction of the sleeve (7) into the recesses (4) by the parts (9, 10) to be inserted on passing through the passage (2) and, after the parts (9, 10) to be inserted have passed, return to the original blocking position under the action of external force.

3. Inserting device according to Claim 1 or 2, **characterized in that** the sleeve (7) is held in the base element (1) by providing a lateral stop (6) and a length stop (5), which are present on that end of the base element (1) which faces the sleeve (7) and are coaxial with the inner surface (12) of the passage (2).

4. Inserting device according to any of the preceding Claims, **characterized in that** the sleeve (7) of the base element (1) are arranged vertically in space.

5. Inserting device according to Claim 1,
**characterized in that** the springy rods (3) describe a parabolic path out of the inner surface (12).

6. Inserting device according to Claim 1,
**characterized in that** the springy rods (3) are flush with the inner surface (12) and have, on their springy ends, hook-shaped extensions which point into the passage (2) and whose part pointing towards the sleeve (7) is flattened.

7. Inserting device according to Claim 2,
**characterized in that** the free ends of the lever parts (25) can be inserted into the recesses (4) in such a way that they drop into the passage (2) under the influence of gravitational force when the sleeve (7) is arranged vertically.

8. Inserting device according to Claim 2,
**characterized in that** actuating elements (20) leading out of the base element (1) are hinged to the lever parts (25) in such a way that the lever parts (25) can be driven for freeing or blocking the passage (2).

9. Inserting device according to Claim 1 or 2, **characterized in that** the inner surface (12) of the base element (1) is formed by at least three radially displaceable and fixable jaws (30) which in each case are provided with at least one springy rod (3) or lever part (25).

10. Inserting device according to any of the preceding Claims, **characterized in that** a holding apparatus (40) displaceable in a controllable manner relative to the passage (2) is provided for receiving, transporting and transferring the optical components and their mechanical retaining and/or securing parts.

11. Inserting device according to Claim 10,
**characterized in that** the holding apparatus (40) has a blade-like support (41) for the parts (9, 10) to be inserted.

12. Inserting device according to Claim 10 or 11, **characterized in that** the holding apparatus (40) is part of a robot arm.

## Revendications

1. Dispositif avec une douille de monture (7) et un corps de base (1) pour insérer des composants optiques et leurs pièces mécaniques de maintien et/ou de sécurité dans la douille de monture (7) présentant les caractéristiques suivantes :
a) le corps de base (1) est relié de façon désolidarisable à la douille de monture (7), le corps de base (1) présentant une ouverture de passage (2) adaptée au diamètre intérieur de la douille de monture (7) et placée coaxialement par rapport à celle-ci ;
b) des pièces d'insertion (9, 10) sont susceptibles d'être introduites dans la douille de monture (7) en passant par l'ouverture de passage (2) du corps de base (1) ;
c) dans l'ouverture de passage (2), des barres (3) ayant l'élasticité de ressort, faisant office d'éléments de blocage, sont reliées à une extrémité rigidement à la paroi intérieure (12) du corps de base (1), l'extrémité libre des barres (3) ayant l'élasticité de ressort se trouvant plus près de la douille de monture (7) que l'extrémité fixe ;
d) dans l'ouverture de passage (2) du corps de base (1) sont prévus des évidements (4) qui s'étendent dans la paroi intérieure (12), sensiblement parallèlement à l'axe de symétrie de l'ouverture de passage (2) ;
e) les barres (3) ayant l'élasticité de ressort sont susceptibles d'être écartées par les éléments d'insertion (9, 10), lors du franchissement de l'ouverture du passage (2) uniquement dans la direction de la douille de monture (7), en pénétrant dans les évidements (4) et, après le passage des pièces d'insertion (9, 10), reviennent élastiquement à leur position de blocage initiale ;

2. Dispositif avec une douille de monture (7) et un corps de base (1) pour insérer des composants optiques et leurs pièces mécaniques de maintien et/ou de sécurité dans la douille de monture (7) présentant les caractéristiques suivantes :
a) le corps de base (1) est relié de façon désolidarisable à la douille de monture (7), le corps de base (1) présentant une ouverture de passage (2) adaptée au diamètre intérieur de la douille de monture (7) et placée coaxialement par rapport à celle-ci ;
b) des pièces d'insertion (9, 10) sont susceptibles d'être introduites dans la douille de monture (7) en passant par l'ouverture de passage (2) du corps de base (1);
c) des parties formant levier (25) faisant office d'éléments de blocage sont montées à pivotement dans l'ouverture de passage (2) sur une extrémité, dans la paroi intérieure (12) du corps de base (1), l'extrémité libre des parties formant levier (25) étant plus près de la douille de monture (7) que l'extrémité montée à pivotement ;
d) dans l'ouverture de passage (2) du corps de base (1) sont prévus des évidements (4) qui s'étendent dans la paroi intérieure (12), sensiblement parallèlement à l'axe de symétrie de l'ouverture de passage (2)) ;
e) les parties formant levier (25) sont susceptibles de pivoter en pénétrant dans les évidements (4), par l'action des parties d'insertion (9, 10) lors du franchissement de l'ouverture de passage (2) uniquement dans la direction de la douille de monture (7) et, après le franchissement des parties d'insertion (9, 10), reviennent à la position de blocage initiale, du fait de l'effet extérieur des forces.

3. Dispositif d'insertion selon la revendication 1 ou 2, **caractérisé en ce que**, pour loger la douille de monture (7) dans le corps de base (1), sont prévues une butée latérale (6) et une butée de longueur (5) qui se trouvent sur l'extrémité, tournée vers la douille de monture (7), du corps de base (1), coaxialement par rapport à la paroi intérieure (12) de l'ouverture de passage (2).

4. Dispositif d'insertion selon l'une des revendications précédentes, **caractérisé en ce que** la douille de monture (7) et le corps de base (1) sont disposés verticalement dans l'espace.

5. Dispositif d'insertion selon la revendication 1, **caractérisé en ce que** les barres (3) ayant l'élasticité d'un ressort sortent, en forme de parabole, hors de la paroi intérieure (12).

6. Dispositif d'insertion selon la revendication 1, **caractérisé en ce que** les barres (3) ayant l'élasticité d'un ressort s'étendent en alignement envers la paroi intérieure (12) et présentent sur leurs extrémités élastiques des prolongements (11) en forme de crochet dirigés dans l'ouverture de passage (2), prolongements dont la partie tournée vers la douille de monture (7) est aplatie.

7. Dispositif d'insertion selon la revendication 2, **caractérisé en ce que** les extrémités libres des parties formant levier (25) sont susceptibles d'être insérées dans les évidements (4) de manière que, dans l'éventualité d'un agencement vertical de la douille de monture (7), sous l'influence de la gravité, elle tombent dans l'ouverture de passage (2).

8. Dispositif d'insertion selon la revendication 2, **caractérisé en ce que** des éléments d'actionnement (20) sortant du corps de base (1) sont articulés aux parties formant levier (25) de manière que les parties formant levier (25) puissent être entraînées pour libérer ou bloquer l'ouverture de passage (2).

9. Dispositif d'insertion selon la revendication 1 ou 2, **caractérisé en ce que** la paroi intérieure (12) du corps de base (1) est formée par au moins trois mâchoires (30) susceptibles d'être déplacées et bloquées radialement, qui sont chacune munies d'au moins une barre (3) ayant l'élasticité d'un ressort ou d'une partie formant levier (25).

10. Dispositif d'insertion selon l'une des revendications précédentes, **caractérisé en ce qu'**un dispositif de maintien (40) déplaçable, pouvant être commandé par rapport à l'ouverture de passage (2), est prévu pour assurer le logement, le transport et la délivrance des composants optiques et de leurs parties de maintien et/ou de sécurité mécaniques.

11. Dispositif d'insertion selon la revendication 10, **caractérisé en ce que** le dispositif de maintien (40) présente une embase (41) en forme de tranchant de lame pour les parties d'insertion (9, 10).

12. Dispositif d'insertion selon la revendication 10 ou 11, **caractérisé en ce que** le dispositif de maintien (40) fait partie d'un bras de robot.
